# FASCICULE DE BREVET EUROPEEN

(11) **EP 1 009 271 B1**
(45) Date de publication et mention de la délivrance du brevet: **19.03.2003**
(21) Numéro de dépôt: 98943937.7
(22) Date de dépôt: 04.09.1998
(51) Int. Cl.: A47J 31/40

(54) **GROUPE D'INFUSION POUR DISTRIBUTEURS AUTOMATIQUES DE BOISSONS**
INFUSIONSGRUPPE FÜR GETRÄNKESPENDER VON AROMATISCHEN GETRÄNKEN
BREWING UNIT FOR AUTOMATIC BEVERAGE DISPENSERS

(30) Priorité: 05.09.1997 IT CO970015 U; 20.03.1998 IT CO980005 U
(43) Date de publication de la demande: 21.06.2000
(73) Titulaire: Moulinex S.A., 14015 Caen Cedex (FR)
(72) Inventeur: GIANNELLI, Giuseppe, I-22077 Olgiate (IT)
(74) Mandataire: Busquets, Jean-Pierre
(86) Numéro de dépôt international: FR9801906
(87) Numéro de publication internationale: WO99012457

(56) Documents cités:
- EP-A- 0 270 141
- DE-A- 2 012 503
- DE-A- 4 203 088
- US-A- 5 479 849

## Description

La présente invention se rapporte à un groupe d'infusion pour distributeur automatique de boissons à partir de poudre de café ou autre et comportant un corps renfermant une chambre d'infusion à axe vertical présentant un fond et un débouché, comprenant un plateau-filtre monté mobile dans ladite chambre au moyen d'un mécanisme d'éjection, et susceptible de recevoir un piston presseur monté déplaçable selon ledit axe vertical, ainsi qu'un vérin hydraulique dont le piston est relié audit piston presseur et peut passer d'une position de repos à une position de travail, sous l'effet d'un liquide sous pression ; position de travail pour laquelle le piston presseur est en compression dans la chambre.

Dans les distributeurs automatiques de boissons, il existe déjà différents types avec des groupes d'infusion divers. Ces groupes possèdent des mouvements mécaniques compliqués mis en oeuvre par des moteurs électriques et réducteurs de coûts élevés, ainsi que des transmissions à leviers qui doivent être très précises. Ces groupes nécessitent également un dosage volumétrique très précis de la poudre de café afin d'éviter que ces mouvements et transmissions ne se bloquent. On comprendra que le fonctionnement de tels groupes soit délicat et qu'il exige une fabrication et un assemblage rigoureux des multiples pièces mécaniques.

Pour tenter de remédier à ces constructions délicates et onéreuses, on a déjà proposé de remplacer ces mouvements motorisés et transmissions à leviers par des mouvements induits par des vérins hydrauliques à double effet. Malheureusement, ce type de vérin hydraulique est délicat à piloter, non seulement dans la course de son piston, mais aussi dans l'équilibre des pressions antagonistes, et induit des coûts prohibitifs pour des distributeurs automatiques de boissons, tels que machines espresso à café qui doivent être fabriqués en grande série.

Pour remédier à ces inconvénients, on a pensé à utiliser un vérin hydraulique à simple effet tel que, par exemple, celui décrit dans le document DE-A-2012503.

Néanmoins, un tel vérin ne procure que sa fonction première et ne permet pas de commander d'autres fonctions de la machine.

Le but de la présente invention est de simplifier les mécanismes en réduisant le nombre de pièces en mouvement et donc de les rendre plus fiables et plus économiques sur le plan industriel, tout en leur procurant un fonctionnement souple et pratique pour garantir le maximum de résultats dans la préparation de l'infusion.

Ces objectifs sont atteints en réalisant un vérin hydraulique comportant un cylindre (18) fermé en ses extrémités par un bouchon supérieur (28) et un fond (19) et au travers desquels coulissent respectivement une tige supérieure (65) reliée par un bras (101) au piston presseur (62) et une tige inférieure (38) reliée au mécanisme d'éjection (16), lesdites tiges (65 et 38) étant solidaires d'une tête de piston (35) montée coulissante dans le cylindre (17) portant un moyen d'étanchéité (35') et déplaçable entre une position de repos en laquelle la tête (35) peut être poussée par la pression d'un liquide introduit par un conduit (71) pratiqué dans le bouchon (28) et une position de travail en laquelle la tête (35) peut être repoussée vers la position haute par le moyen comprimable et extensible (34-134) agencé sous la tête de piston (35).

Ainsi, grâce à cette construction particulière du vérin, le piston assure une double fonction à savoir, dans une première étape, la descente et la compression du piston presseur dans la chambre d'infusion sous l'effet du liquide envoyé sous pression, et dans une seconde étape la remontée et l'extraction automatique dudit piston presseur hors de la chambre sous l'effet du moyen comprimable et extensible, ainsi que la mise en oeuvre du mécanisme d'éjection.

En outre, du fait de la liaison commune des tiges supérieure et inférieure à la tête de piston on garantit un fonctionnement direct et fiable du mécanisme de compactage de la poudre de café à l'intérieure de la chambre d'infusion étant donné la subordination du mécanisme d'éjection au mouvement de la tête de piston.

En outre, ledit vérin à simple effet et le piston presseur, fonctionnant sans micro-interrupteur de fin de course aussi bien inférieure que supérieure, ne peuvent pas se bloquer en une position intermédiaire puisqu'il n'existe aucune tringlerie complémentaire à mouvement ajusté et assurent donc toujours la mise en oeuvre correcte du mécanisme d'éjection.

Suivant une caractéristique préférentielle de l'invention, le corps du groupe d'infusion est agencé latéralement au cylindre et la tige supérieure du vérin hydraulique porte le bras formant potence dont l'extrémité libre est reliée au piston presseur, les courses des pistons étant ainsi effectuées selon des directions pratiquement parallèles.

Grâce à une telle construction, on obtient une structure compacte en hauteur du groupe et un fonctionnement fiable malgré les inconvénients de précision inhérents à une fabrication des pièces en grande série. En outre, le gain en encombrement est lié directement au gain en prix de revient sur la machine distributeur automatique de boissons.

Selon une autre caractéristique de l'invention, on prévoit un moyen d'assécher les galettes de marc en fin de cycle d'infusion et pour cela, le piston presseur comporte un conduit interne de passage de l'infusion qui présente trois orifices, un premier orifice d'entrée de l'infusion débouchant dans la face inférieure du piston, un second orifice de sortie formant petite fontaine de sortie d'infusion et un troisième orifice formant prise d'air et agencé dans la partie supérieure du piston, ledit piston presseur étant monté en outre mobile axialement sur le pivot et ledit troisième orifice comportant un joint susceptible de fermer cet orifice lorsque le piston vient en contact avec la partie inférieure du bras.

Suivant encore un autre aspect de l'invention, il est proposé un mécanisme d'éjection de la galette de marc formée dans la chambre d'infusion et qui comprend, d'une part, une tige solidaire du plateau-filtre, montée selon l'axe vertical, coulissante dans le corps et présentant en son extrémité externe un petit plateau, ledit plateau-filtre étant rappelé élastiquement vers le fond de la chambre d'infusion par un ressort agencé entre le corps et le petit plateau, et d'autre part, un bras relié transversalement à la tige inférieure du vérin, monté mobile en rotation sur ladite tige, et dont une extrémité vient en prise avec un chemin d'une came portée par une aile s'étendant dans un plan vertical sous le vérin, tandis que l'autre extrémité est susceptible soit de venir en prise avec le petit plateau lorsque la tête du piston passe de sa position basse à sa position haute, soit d'échapper à ce plateau lorsque la tête passe de sa position haute à sa position basse.

Selon encore une autre caractéristique importante de l'invention, le groupe d'infusion comporte un dispositif d'expulsion des marcs d'infusion comportant une console guide saillant vers le haut, solidaire du vérin et portant un levier monté pivotant autour d'un axe transversal à l'axe vertical et portant en son extrémité libre une raclette susceptible d'être animée d'un mouvement transversal de balayage pendulaire dans la zone du débouché au moyen d'un doigt solidaire du bras qui vient en prise avec un cran porté par le levier au niveau de l'axe, lorsque la tête du piston vient occuper sa position de repos.

Ce dispositif est d'une construction extrêmement simple, ne faisant appel qu'à une seule pièce mobile n'exigeant ainsi aucun ajustement de précision après fabrication et donc augmentant la fiabilité de fonctionnement et réduisant parallèlement les coûts de fabrication.

Les caractéristiques et avantages de l'invention ressortiront de la description qui va suivre, prise à titre d'exemple non limitatif, en référence aux dessins annexés dans lesquels :
- la figure 1 est une vue de face en élévation d'un groupe d'infusion selon l'invention ;
- la figure 2 est une vue de gauche du groupe d'infusion de la figure 1 ;
- la figure 3 est une coupe verticale partielle du groupe selon la figure 1, illustrant une chambre d'infusion, un vérin hydraulique, et un mécanisme d'éjection ;
- la figure 4 est une coupe verticale partielle du groupe selon la figure 2 avec éclatement d'une chaudière instantanée et suppression d'un mécanisme d'éjection ;
- la figure 5 est une vue en élévation et à échelle agrandie d'un piston presseur selon l'invention ;
- la figure 6 est une coupe verticale du piston presseur de la figure 5 ;
- la figure 7 est une vue de dessous du piston presseur de la figure 5 ;
- la figure 8 est une vue de dessus selon la ligne VIII - VIII de la figure 5 ;
- la figure 9 illustre schématiquement en élévation un dispositif d'expulsion des marcs à levier, incorporé au groupe d'infusion selon l'invention ;
- la figure 10 est une coupe partielle d'un bouchon du vérin hydraulique illustré notamment à la figure 3 ;
- la figure 11 est une vue en plan d'un détail du mécanisme d'éjection illustré notamment aux figures 3 et 4 ;
- la figure 12 est une vue de dessous de la figure 10 avec élimination d'un joint ;
- les figures 13, 14, 15, 16, 17 et 18 sont des vues différentes en coupe partielle du groupe d'infusion selon l'invention illustrant les diverses étapes de fonctionnement durant un cycle de préparation d'infusion ;
- la figure 19 est une variante de réalisation du groupe d'infusion et illustre en coupe partielle un nouveau vérin hydraulique selon l'invention.

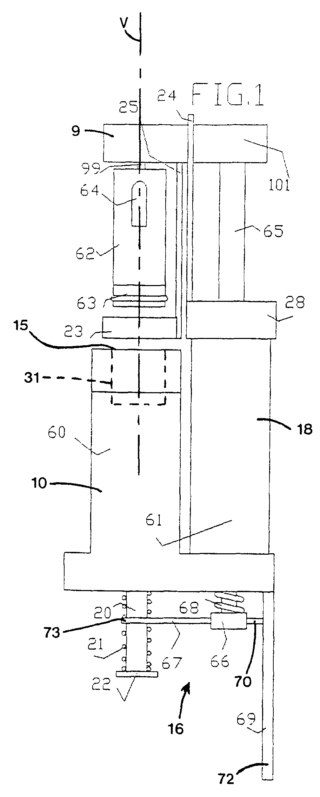

Le groupe d'infusion illustré notamment aux figures 1 à 4 est destiné à équiper une machine à café du type automatique comprenant une alimentation en eau froide, un distributeur de café en poudre provenant soit d'un magasin à poudre de café, soit d'un broyeur à café intégré au distributeur, une chaudière pour chauffer l'eau froide, une pompe électrique de circulation d'eau reliée à l'alimentation en eau froide et à la chaudière pour la confection de l'infusion et le fonctionnement d'un vérin hydraulique, ainsi qu'un dispositif électronique de commande et de gestion des cycles de préparation des infusions.

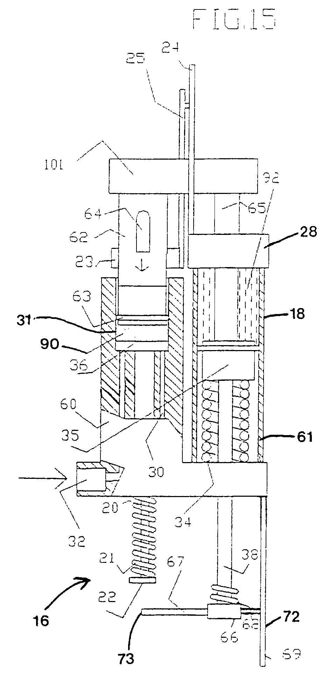

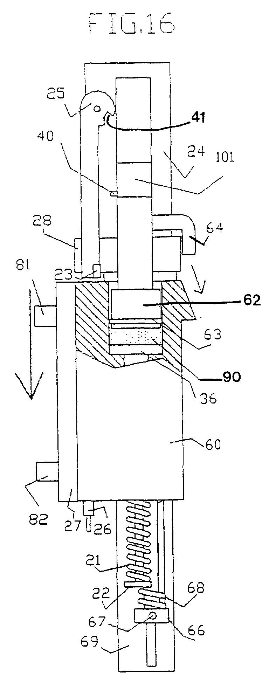

Ce groupe d'infusion comprend un corps 10 renfermant une chambre d'infusion 31 à axe vertical V présentant un fond 11 et un débouché 15, comportant un plateau-filtre 36 monté mobile dans ladite chambre au moyen d'un mécanisme d'éjection 16, et susceptible de recevoir un piston presseur 62 monté déplaçable selon l'axe vertical V, ainsi qu'un vérin hydraulique 61 dont le piston 35 est relié audit piston presseur et peut passer, sous l'effet d'un liquide sous pression tel que l'eau propulsée par la pompe électrique, d'une position de repos à une position de travail, position de travail pour laquelle le piston presseur 62 est en compression dans la chambre d'infusion 31 (voir figures 15 et 16).

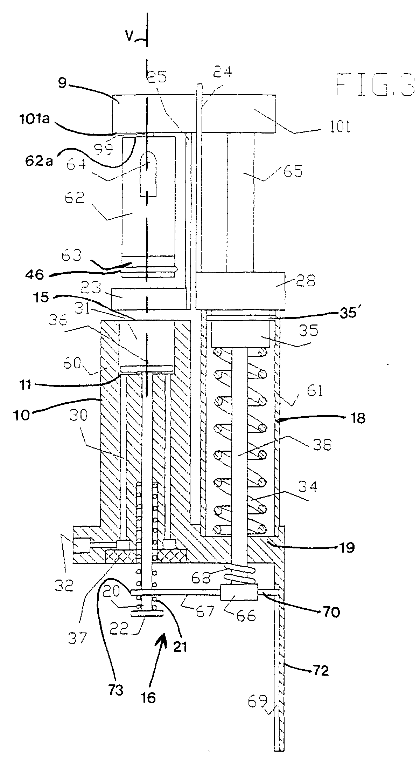

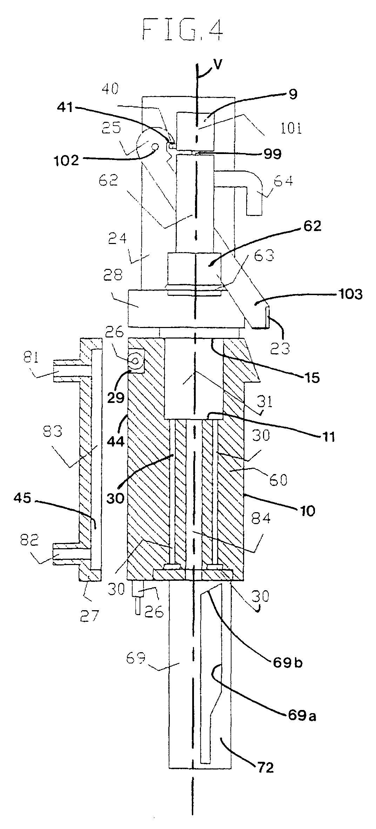

Comme on le voit notamment sur les figures 3 et 4, la chaudière 60 de type instantané est formée en une seule pièce avec le corps 10 renfermant la chambre d'infusion 31 et comporte une résistance électrique chauffante 26 insérée dans le corps 10. Cette résistance est du type par exemple blindée et est conformée en une épingle en forme de U qui est insérée dans une rainure 29 de la paroi latérale du corps 10 et qui s'étend pratiquement sur toute la hauteur de ce corps de manière à chauffer intégralement la chambre d'infusion 31 et des canaux 30 rectilignes et parallèles à l'axe V et servant de passages pour l'eau froide qui pénètre dans ces canaux par une entrée 32 agencée à la base du corps 10.

Afin d'équiper ce type de machine à café décrit plus haut d'une fonction "sortie vapeur", le groupe d'infusion selon l'invention comporte également une chaudière secondaire 83 accolée à la paroi latérale 44 du corps 10 et ménageant une chambre aplatie 45 chauffée par la résistance 26 et ayant une entrée d'eau 81 et une sortie vapeur 82.

Selon l'invention, le vérin hydraulique 61 est un vérin à simple effet, le piston 35 étant rappelé en sa position de repos par un moyen comprimable et extensible. Selon une première caractéristique de l'invention, ledit moyen comprimable et extensible est un ressort à boudin 34. Ce ressort est soit du type cylindrique à spires non jointives, soit du type conique à spires non jointives permettant un écrasement axial plus important et donc un gain d'encombrement en hauteur du vérin.

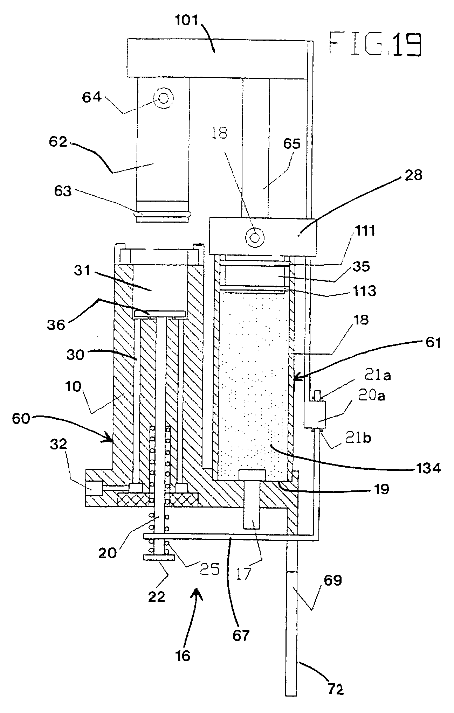

Selon une variante de réalisation de l'invention illustrée à la figure 19, le moyen comprimable et extensible est un gaz 134. Ce gaz est de préférence un gaz neutre. Ce gaz est introduit par exemple par une valve de chargement 17 agencée dans le fond 19 du vérin 61.

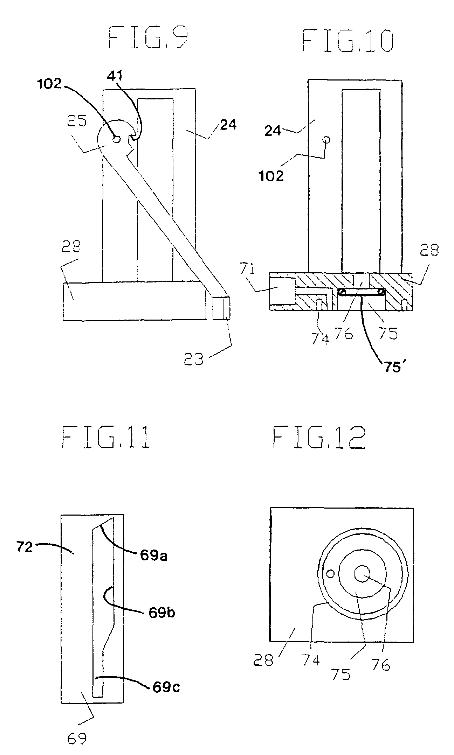

Dans la première réalisation illustrée aux figures 1 à 18, le vérin hydraulique comporte un cylindre 18 fermé en ses extrémités par un bouchon supérieur 28 et un fond 19 et au travers desquels coulissent respectivement une tige supérieure 65 reliée par un bras 101 au piston presseur 62 et une tige inférieure 38 reliée au mécanisme d'éjection 16, lesdites tiges 65 et 38 étant solidaires de la tête de piston 35 montée coulissante dans le cylindre 18 et déplaçable entre une position haute en laquelle la tête 35 est poussée par la pression du liquide en provenance de la pompe (7 à 10 bars) et introduit par un conduit entrée-sortie 71 (figure 10) pratiqué dans le bouchon 28 et alimenté par une électrovanne à trois voies (non représentée), et une position basse en laquelle la tête 35 est repoussée vers la position haute par le ressort 34 agencé sous la tête 35.

Pour assurer une bonne étanchéité du vérin, le bouchon 28 présente (figures 10 et 12) un siège 74 qui reçoit à force le bord du cylindre 18, ainsi qu'un siège 75 pour un joint 75' d'étanchéité de la tige 65 qui traverse un alésage 76 pratiqué dans ledit bouchon. D'autre part, la tête de piston 35 porte un moyen d'étanchéité 35'.

Dans la variante de réalisation illustrée à la figure 19 dans laquelle on a gardé les mêmes références pour les parties semblables, le vérin hydraulique 61 comporte un cylindre 18 fermé en ses extrémités par un bouchon supérieur 28 et un fond 19. Le fond 19 reçoit la valve 17 de chargement en gaz 134, tandis que le bouchon 28 est traversé par la tige 65. La tête 35 du piston porte un moyen d'étanchéité comportant deux joints périphériques 111 et 113.

Grâce à ce vérin hydraulique hybride du type à simple effet, on obtient une construction simple, fiable et peu coûteuse. En effet, on élimine les problèmes de commande du piston par une électrovanne supplémentaire ainsi que les détecteurs de course associés à la tête et l'on ménage la pompe électrique du fait que le ressort ou le gaz maintient seul ladite tête en position haute sans exercer de pression anormale sur le bouchon 28.

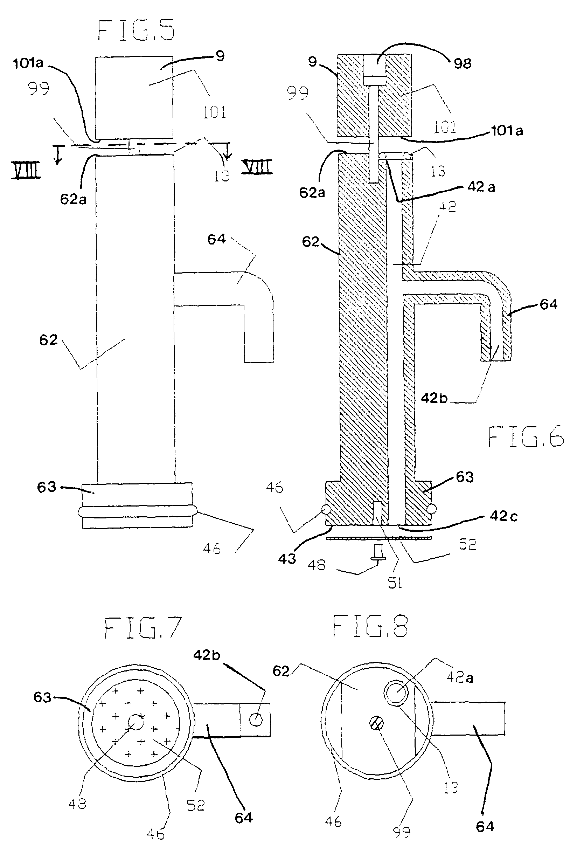

Selon une autre caractéristique préférentielle de l'invention, le corps 10 du groupe d'infusion est agencé latéralement au cylindre 18 et la tige 65 du vérin hydraulique 61 porte le bras 101 formant potence dont l'extrémité libre 9 est reliée au piston presseur 62, les courses des pistons 35 et 62 étant ainsi effectuées selon des directions pratiquement parallèles. En outre, le piston presseur 62 est monté flottant sur un pivot 99 relié au bras 101 en ménageant ainsi un léger jeu entre la partie supérieure 62a du piston presseur et la partie inférieure 101a du bras (voir figures 5 et 6).

Grâce à une telle construction, on réduit fortement l'encombrement en hauteur du groupe d'infusion par rapport à un agencement avec vérin aligné sur l'axe vertical V de la chambre d'infusion. D'autre part, la liaison par potence entre le vérin 61 et le piston presseur 62 permet le montage flottant dudit piston sans mécanisme complexe et donc assure une bonne coïncidence et/ou concentricité entre le piston presseur 62 et la chambre 31 lors de son introduction et son coulissement dans ladite chambre. Pour faciliter cette introduction du piston presseur, le bord du débouché 15 peut être légèrement évasé. Un autre avantage de cette construction par potence est la répartition des forces entre le vérin 61 et le piston presseur 62 lors d'un dosage incorrect de la mouture dans la chambre d'infusion 31, répartition des forces engendrée par le chaînage tige 65, bras 101, pivot 99.

Selon une autre caractéristique particulière illustrée aux figures 5 et 6, le piston presseur 62 comporte un conduit interne 42 de passage de l'infusion qui présente trois orifices, un premier orifice d'entrée de l'infusion 42c débouchant dans la face inférieure 43 du piston presseur, un second orifice de sortie 42b formant une petite fontaine 64 de sortie d'infusion et un troisième orifice 42a formant prise d'air et agencé dans la partie supérieure 62a du piston. La petite fontaine 64 est reliée directement à une goulotte (non représentée) de remplissage des tasses. Le piston presseur 62 présente en son extrémité une tête 63 comportant un joint d'étanchéité périphérique 46 ainsi qu'un filtre 52 d'infusion retenu sur ladite tête par une vis 48 vissée dans un trou 51. Comme on le voit sur la figure 6, le piston presseur 62 est monté en outre mobile axialement sur le pivot 99 grâce au jeu axial de fixation de ce pivot dans le trou 98 pratiqué dans le bras 101, et ledit troisième orifice 42a comporte un joint 13 susceptible de fermer cet orifice lorsque le piston vient en contact avec la partie inférieure 101a du bras 101 lors de la compression du piston presseur 62 sur la mouture contenue dans la chambre 31.

L'intérêt de ce montage du piston presseur mobile axialement en combinaison avec le troisième orifice 42a réside dans la création d'une prise d'air extérieur qui, lors du mouvement de remontée dudit piston presseur de sa position de compression à sa position d'extraction, crée une dépression dans la chambre 31 et donc une entrée d'air frais suffisamment importante dans le conduit 42 pour sécher la galette de marc reposant sur le plateau-filtre 36.

Selon encore une autre caractéristique de l'invention, le mécanisme d'éjection 16 comprend, d'une part, une tige 20 solidaire du plateau-filtre 36, montée selon l'axe vertical V, coulissante dans le corps 10, et présentant en son extrémité externe un petit plateau 22, le plateau-filtre 36 étant rappelé élastiquement vers le fond 11 de la chambre d'infusion 31 par un ressort 21 agencé entre le corps 10 et le petit plateau 22, et d'autre part, un bras 67 relié transversalement à la tige inférieure 38 du vérin 61, monté mobile en rotation sur ladite tige au moyen d'un assemblage plateau de soutien 66 lié à la tige et ressort de friction 68, et dont une extrémité 70 vient en prise avec un chemin 69a d'une came 69 (voir figures 3 et 11) portée par une aile 72 s'étendant dans un plan vertical sous le vérin 61, tandis que l'autre extrémité 73 est susceptible soit de venir en prise avec le petit plateau 22 lorsque la tête du piston 35 passe de sa position de travail à sa position de repos, soit d'échapper à ce plateau lorsque la tête 35 passe de sa position de repos à sa position de travail. Cette came 69 possède une pente 69b de retour à une position latérale du bras 67 par rapport au petit plateau 22.

Ce mécanisme d'éjection 16 est d'une construction simple et économique puisqu'il ne comporte aucun mécanisme de réglage ou de liaison ajustée, le bras 67 se positionnant de lui-même sous le petit plateau 22 en fonction du mouvement de son extrémité 70 dans la simple came 69. Ce mécanisme d'éjection, par sa simplicité, garantit la remontée automatique du plateau-filtre 36 à chaque fin de cycle d'infusion et au bon moment, c'est-à-dire en fin de course de la tête 35 du vérin hydraulique 61 vers sa position de repos.

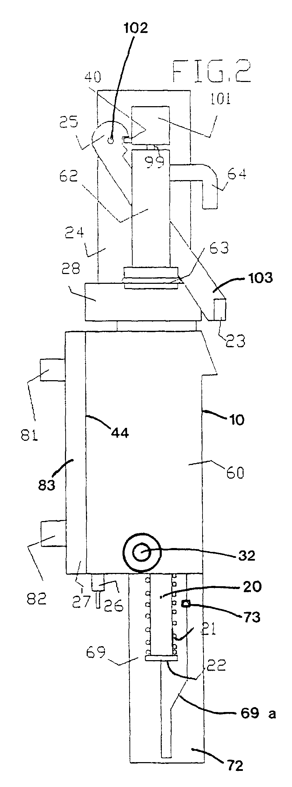

Afin de parfaire l'éjection de la galette de marc asséchée par le courant d'air du conduit 42, le groupe d'infusion comporte un dispositif d'expulsion des marcs d'infusion hors du plateau-filtre 36. Ce dispositif mieux illustré aux figures 2,4, 9, 14 et 18 comporte une console guide 24 saillant vers le haut, solidaire du vérin 61 et portant un levier 25 monté pivotant autour d'un axe 102 transversal à l'axe vertical V et portant en son extrémité libre 103 une raclette 23 susceptible d'être animée d'un mouvement transversal de balayage pendulaire dans la zone du débouché 15 au moyen d'un doigt 40 solidaire du bras 101, saillant transversalement et qui vient en prise avec un cran 41 porté par le levier 25 au niveau de l'axe 102 lorsque la tête du piston 35 vient occuper sa position de repos. Ce dispositif d'expulsion des marcs est également d'une construction très simplifiée et d'un automatisme direct éliminant tout réglage après construction. Le simple levier 25 est actionné directement en fin de course du vérin et est basculé violemment en position d'expulsion du fait de l'implantation rapprochée du cran 41 de l'axe 102. Il est à noter que le dispositif d'expulsion et le mécanisme d'éjection représentés sur cette figure 19 sont différents dans leur réalisation de ceux décrits ci-dessus et ne font pas partie de cette Demande de brevet.

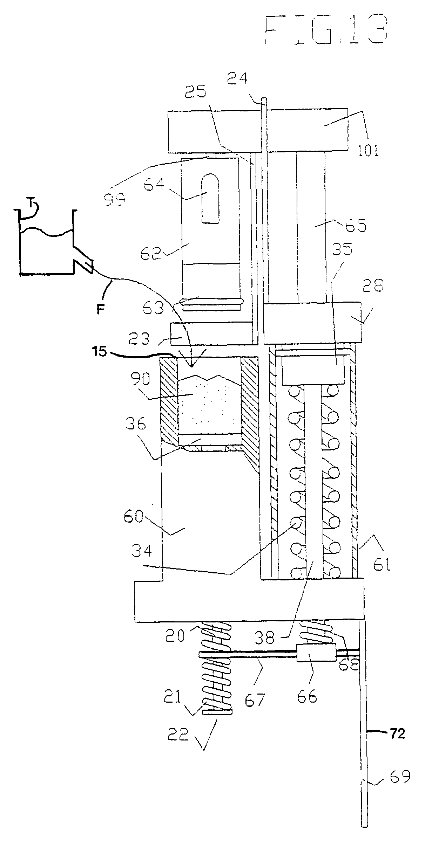

En se référant maintenant seulement aux figures 13 à 18, on va résumer ci-après le fonctionnement du groupe d'infusion pour distributeur automatique de boissons à partir de poudre de café déversée (flèche F) par une trémie schématisée en T (figure 13).

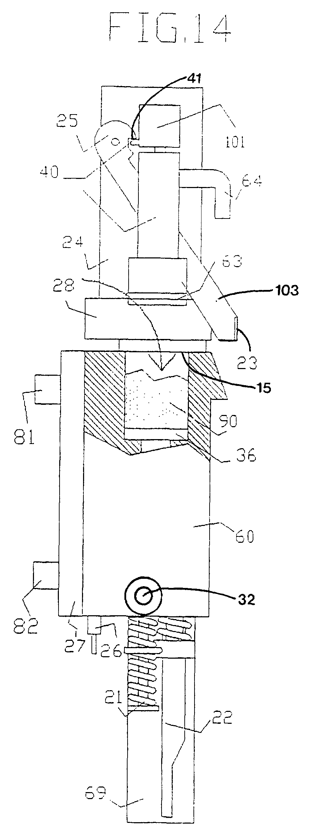

Dans la première phase d'un cycle d'infusion (figures 13 et 14), le vérin hydraulique à simple effet 61 est en position de repos sous l'effet du ressort 34 et le piston presseur 62 est maintenu au-dessus de la chambre d'infusion 31 permettant ainsi de remplir cette chambre d'une quantité dosée de café en poudre 90 ; la raclette 23 étant maintenue écartée du débouché 15 de la chambre au moyen du doigt 40 en prise avec le cran 41, et le mécanisme d'éjection 16 étant neutralisé car le bras 67 est maintenu par la came 69, à savoir la partie haute de la pente 69b, à côté et au-dessus du petit plateau 22.

Dans une seconde phase dudit cycle (figures 15, 16), on introduit à l'aide de la pompe électrique du liquide sous pression 92 dans le cylindre 18 au-dessus de la tête 35 du piston pour l'amener à l'encontre du ressort 34 en sa position de travail, position pour laquelle le ressort est comprimé totalement et détermine ainsi la course correspondante du piston presseur 62 et donc la compression, de la poudre de café 90 dans la chambre 31. Durant cette compression le bras 101 a fermé l'orifice 42a d'entrée d'air et le bras 67 du mécanisme d'éjection s'est positionné grâce à la came 69, à savoir le guide étroit 69c, dans l'alignement et en dessous du petit plateau 22. Au moyen de l'unique électropompe et par l'électrovanne à trois voies, on introduit l'eau froide par l'entrée 32 qui est chauffée instantanément dans les canaux 30 formant échangeur de chaleur, et qui passe à travers la poudre 90 durant un temps de pression préétabli, puis l'infusion ainsi élaborée passe par le conduit 42 pour s'écouler par la fontaine 64, via un tube souple non représenté, vers le moyen de répartition dans les tasses de café posées sur un socle de la machine à café. On notera que dans cette phase le levier 25 (figure 16) et la raclette 23 sont en attente, le doigt 40 étant éloigné vers le bas du cran 41.

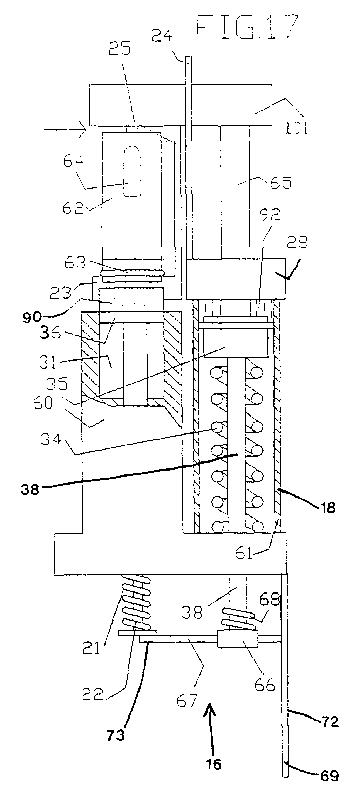

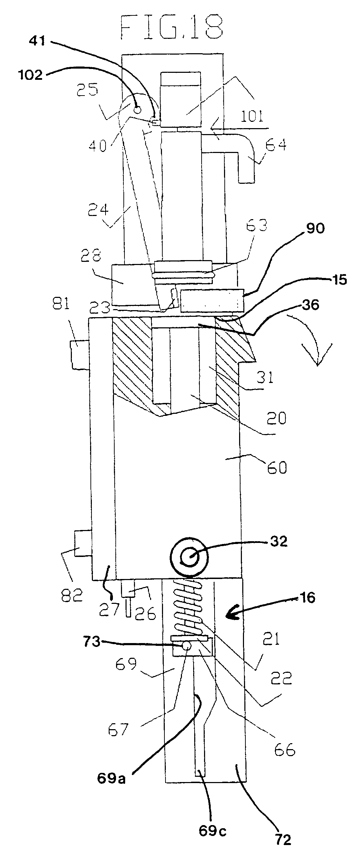

Dans une troisième phase dite de fin de cycle de l'infusion (figures 17 et 18), l'électrovanne à trois voies pilotée par le dispositif électronique de gestion coupe l'alimentation en eau froide de la chaudière 60 et autorise l'échappement du liquide hors du vérin 61 qui s'effectue au moyen du ressort 34 qui se détend automatiquement et rappelle la tête 35 en sa position de repos. Au cours de ce mouvement du piston 35, d'une part, le bras 67 s'est positionné grâce au chemin 69a de la came 69 sous le petit plateau 22 et repousse vers le haut à l'encontre du ressort 21 le plateau filtre 36 pour l'amener en fin de détente du ressort 34 au niveau du débouché 15 de la chambre d'infusion 31, et d'autre part, simultanément au mouvement ascensionnel du piston 35 et grâce à la potence 65-101, le piston presseur 62 est dégagé de la chambre 31. Durant la course dudit piston presseur, le bras 101 tire sur ce piston presseur au moyen du pivot 99 et autorise la fuite d'air au niveau du troisième orifice 42a pour faire entrer cet air dans le conduit 42 jusqu'à l'orifice 42c afin de permettre d'assécher et de mieux compacter la galette de marc 90 à éjecter. Puis, pratiquement en fin de course de la tête 35 du piston du vérin 61, le doigt 40 porté par le bras 101 vient s'enclencher dans le cran 41 du levier 25 provoquant ainsi le mouvement brusque de balayage pendulaire de la raclette 23 qui chasse ainsi violemment la galette de marc 90 hors du plateau-filtre 36 et donc du débouché 15 de la chambre 31. A peine le cycle terminé, la came 69 par sa pente 69b a positionné de nouveau latéralement le bras 67 provoquant la chute du plateau-filtre 36dans le fond de la chambre 31 sous l'effet du ressort de rappel 21 ; la raclette 23 sera rappelée en position d'attente dès qu'un nouveau cycle d'infusion sera initié.

L'invention s'applique notamment aux machines de préparation de café du type espresso.

## Revendications

1. Groupe d'infusion pour distributeur automatique de boissons à partir de poudre de café ou autre et comportant un corps (10) renfermant une chambre d'infusion (31) à axe vertical (V) présentant un fond (11) et un débouché (15), comprenant un plateau-filtre (36) monté mobile dans ladite chambre au moyen d'un mécanisme d'éjection (16), et susceptible de recevoir un piston presseur (62) monté déplaçable selon ledit axe vertical (V), ainsi qu'un vérin hydraulique à simple effet (61) dont le piston (35) est relié audit piston presseur et peut passer d'une position de repos à une position de travail, pour laquelle le piston presseur est en compression dans la chambre, sous l'effet d'un liquide sous pression ; ledit piston (35) étant rappelé en sa position de repos par un moyen comprimable et extensible (34-134).
**caractérisé en ce que** le vérin hydraulique (61) comporte un cylindre (18) fermé en ses extrémités par un bouchon supérieur (28) et un fond (19) et au travers desquels coulissent respectivement une tige supérieure (65) reliée par un bras (101) au piston presseur (62) et une tige inférieure (38) reliée au mécanisme d'éjection (16), lesdites tiges (65 et 38) étant solidaires d'une tête de piston (35) montée coulissante dans le cylindre (18), portant un moyen d'étanchéité (35'), et déplaçable entre une position de repos en laquelle la tête (35) peut être poussée par la pression d'un liquide introduit par un conduit (71) pratiqué dans le bouchon (28) et une position de travail en laquelle la tête (35) peut être repoussée vers la position haute par le moyen comprimable et extensible (34-134) agencé sous la tête de piston (35).

2. Groupe d'infusion selon la revendication 1,
**caractérisé en ce que** le moyen comprimable et extensible est un ressort à boudin (34).

3. Groupe d'infusion selon la revendication 1,
**caractérisé en ce que** le moyen comprimable et extensible est un gaz (134).

4. Groupe d'infusion selon l'une des revendications 1 à 3,
**caractérisé en ce que** le corps (10) est agencé latéralement au cylindre (18) et la tige supérieure (65) du vérin hydraulique (61) porte le bras (101) formant potence et dont l'extrémité libre (9) est reliée au piston presseur (62), les courses des pistons (35, 62) étant ainsi effectuées selon des directions pratiquement parallèles.

5. Groupe d'infusion selon l'une quelconque des revendications 1 à 4,
**caractérisé en ce que** le piston presseur (62) est monté flottant sur un pivot (99) relié au bras (101) en ménageant ainsi un léger jeu axial entre la partie supérieure (62a) du piston presseur (62) et la partie inférieure (101a) du bras.

6. Groupe d'infusion selon la revendication 5,
**caractérisé en ce que** le piston presseur (62) comporte un conduit interne (42) de passage de l'infusion qui présente trois orifices, un premier orifice d'entrée de l'infusion (42c) débouchant dans la face inférieure (43) du piston, un second orifice de sortie (42b) formant petite fontaine (64) de sortie d'infusion et un troisième orifice (42a) formant prise d'air et agencé dans la partie supérieure (62a) du piston, ledit piston presseur (62) étant monté en outre mobile axialement sur le pivot (99) et ledit troisième orifice (42a) comportant un joint (13) susceptible de fermer cet orifice lorsque le piston vient en contact avec la partie inférieure (101a) du bras (101).

7. Groupe d'infusion selon l'une des caractéristiques 1 à 6,
**caractérisé en ce que** le mécanisme d'éjection (16) comprend, d'une part, une tige (20) solidaire du plateau filtre (36), montée selon l'axe vertical (V), coulissante dans le corps (10) et présentant en son extrémité externe un petit plateau (22), ledit plateau-filtre (36) étant rappelé élastiquement vers le fond (11) de la chambre d'infusion (31) par un ressort (21) agencé entre le corps (10) et le petit plateau (22), et d'autre part, un bras (67) relié transversalement à la tige inférieure (38) du vérin (61), monté mobile en rotation sur ladite tige, et dont une extrémité (70) vient en prise avec un chemin (69a) d'une came (69) portée par une aile (72) s'étendant dans un plan vertical sous le vérin (61), tandis que l'autre extrémité (73) est susceptible soit de venir en prise avec le petit plateau (22) lorsque la tête du piston (35) passe de sa position basse à sa position haute, soit d'échapper à ce plateau lorsque la tête (35) passe de sa position haute à sa position basse.

8. Groupe d'infusion selon l'une des revendications 1 à 7,
**caractérisé en ce qu**'il comporte un dispositif d'expulsion des marcs d'infusion comportant une console guide (24) saillant vers le haut, solidaire du vérin (61) et portant un levier (25) monté pivotant autour d'un axe (102) transversal à l'axe vertical (V) et portant en son extrémité libre (103) une raclette (23) susceptible d'être animée d'un mouvement transversal de balayage pendulaire dans la zone du débouché (15) au moyen d'un doigt (40) solidaire du bras (101) qui vient en prise avec un cran (41) porté par le levier (25) au niveau de l'axe (102), lorsque la tête du piston (35) vient occuper sa position de repos.

## Claims

1. Infusion unit for an automatic beverage dispenser using coffee powder or the like and comprising a body (10) enclosing an infusion chamber (31) with a vertical axis (V) having a bottom (11) and an outlet (15), comprising a filter plate (36) mounted so as to be able to move in said chamber by means of an ejection mechanism (16), and able to receive a pressing piston (62) mounted so as to be able to move along the said vertical axis (V), as well as a single-acting hydraulic ram (61) whose piston (35) is connected to said pressing piston and can move from an idle position to a working position in which the pressing piston is under compression in the chamber, under the effect of a pressurised liquid ; the said piston (35) being returned to its idle position by a compressible and extensible means (34-134), **characterised in that** the hydraulic ram (61) comprises a cylinder (18) closed at its ends by a top plug (28) and a bottom (19) and through which there slide respectively a top rod (65) connected by an arm (101) to the pressing piston (62) and a bottom rod (38) connected to the ejection mechanism (16), said rods (65 and 38) being fixed to a piston head (35) mounted so as to slide in the cylinder (18), carrying a sealing means (35'), and able to move between an idle position in which the head (35) can be pushed by the pressure of a liquid introduced through a conduit (71) formed in the plug (28) and a working position in which the head (35) can be pushed towards the high position by a compressible and extensible means (34-134) arranged under the piston head (35).

2. Infusion unit according to claim 1, **characterised in that** the compressible and extensible means is a coiled spring (34).

3. Infusion unit according to claim 1, **characterised in that** the compressible and extensible means is a gas (134).

4. Infusion unit according to one of claims 1 to 3, **characterised in that** the body (10) is arranged laterally to the cylinder (18) and the top rod (65) of the hydraulic ram (61) carries the arm (101) forming a bracket and whose free end (9) is connected to the pressing piston (62), the travels of the pistons (35, 62) thus being made in practically parallel directions.

5. Infusion unit according to any one of claims 1 to 4, **characterised in that** the pressing piston (62) is mounted so as to float on a pivot (99) connected to the arm (101) whilst thus providing a slight axial clearance between the top part (62a) of the pressing piston (62) and the bottom part (101a) of the arm.

6. Infusion unit according to claim 5, **characterised in that** the pressing piston (62) comprises an internal conduit (42) for passage of the infusion which has three orifices, a first inlet orifice for admitting the infusion (42c) opening out in the bottom face (43) of the piston, a second outlet orifice (42b) forming a small infusion outlet fountain (64) and a third orifice (42a) forming a breather and arranged in the top part (62a) of the piston, the said pressing piston (62) also being mounted so as to be able to move axially on the pivot (99) and the said third orifice (42a) comprising a joint (13) able to close off this orifice when the piston comes into contact with the bottom part (101a) of the arm (101).

7. Infusion unit according to one of claims 1 to 6, **characterised in that** the ejection mechanism (16) comprises on the one hand a rod (20) fixed to the filter plate (36), mounted on the vertical axis (V), sliding in the body (10) and having a small plate (22) at its external end, the said filter plate (36) being returned elastically towards the bottom (11) of the infusion chamber (31) by a spring (21) arranged between the body (10) and the small plate (22), and on the other hand an arm (67) connected transversely to the bottom rod (38) of the ram (61), mounted so as to be able to move in rotation on the said rod, and one end (70) of which comes into engagement with a track (69a) on a cam (69) carried by a wing (72) extending in a vertical plane under the ram (61), whilst the other end (73) is able either to come into engagement with the small plate (22) when the head of the piston (35) passes from its low position to its high position, or to escape from this plate when the head (35) passes from its high position to its low position.

8. Infusion unit according to one of claims 1 to 7, **characterised in that** it comprises a device for expelling the infusion dregs comprising a guide bracket (24) projecting upwards, fixed to the ram (61) and carrying a lever (25) mounted so as to pivot about a spindle (102) transverse to the vertical axis (V) and carrying at its free end (103) a scraper (23) able to be driven in a transverse pendular sweeping movement in the area of the outlet (15) by means of a finger (40) fixed to the arm (101) which comes into engagement with a notch (41) carried by the lever (25) at the level of the spindle (102), when the head of the piston (35) comes to occupy its idle position.

## Patentansprüche

1. Brüheinheit für einen automatischen Spender von Brühgetränken zubereitet aus Kaffeemehl oder anderem mit einem Körper (10), der eine Brühkammer (31) mit senkrechter vertikaler Achse V mit einem Boden (11) und einer Mündung (15) und einer mittels eines Auswurfmechanismus (16) in der Kammer beweglich gehaltenen Filterplatte (36) aufweist, die einen gemäß der vertikalen Achse V verschiebbar montierten Preßkolben (62) aufnehmen kann, sowie mit einem einfach wirkenden Arbeitszylinder (61), dessen Kolben (35) mit dem Preßkolben verbunden ist und von einer Ruhestellung in eine Arbeitsstellung gelangen kann, in der der Preßkolben in der Kammer unter der Wirkung einer unter Druck stehenden Flüssigkeit unter Druck steht, wobei der Kolben (35) durch ein komprimierbares und ausdehnbares Mittel (34 - 134) in seine Ruhestellung zurückgeholt wird, **dadurch gekennzeichnet, daß** der Arbeitszylinder (61) einen Zylinder (18) aufweist, der an seinen Enden durch einen oberen Stopfen (28) und einen Boden (19) geschlossen ist und durch den jeweils eine obere Stange (65), die durch einen Arm (101) mit dem Preßkolben (62) verbunden ist, und eine mit dem Auswurfmechanismus verbundene untere Stange gleiten, wobei die Stangen (65 und 38) fest verbunden sind mit einem im Zylinder (18) gleitend montierten Zylinderkopf (35), der eine Dichtung (35') trägt und zwischen einer Ruhestellung, in welcher der Kopf (35) dem Druck einer durch eine im Stopfen (28) ausgebildete Leitung (71) eingeführten Flüssigkeit ausgesetzt werden kann, und einer Arbeitsstellung, in welcher der Kopf (35) durch die unter dem Kolbenkopf (35) angeordneten komprimierbaren und ausdehnbaren Mittel (34 - 134) in seine obere Stellung zurückgedrückt werden kann, verschiebbar ist.

2. Brüheinheit nach Anspruch 1, **dadurch gekennzeichnet, daß** das komprimierbare und ausdehnbare Mittel eine Schraubenfeder (34) ist.

3. Brüheinheit nach Anspruch 1, **dadurch gekennzeichnet, daß** das komprimierbare und ausdehnbare Mittel ein Gas (134) ist.

4. Brüheinheit nach einem der Ansprüche 1 bis 3, **dadurch gekennzeichnet, daß** der Körper (10) seitlich am Zylinder (18) angebracht ist und die obere Stange (65) des Arbeitszylinders (61) den einen Träger bildenden Arm (101) trägt, dessen freies Ende (9) mit dem Preßkolben (62) verbunden ist, wobei die Laufstrecken der Kolben (35, 62) so gemäß praktisch parallelen Richtungen verlaufen.

5. Brüheinheit nach einem der Ansprüche 1 bis 4, **dadurch gekennzeichnet, daß** der Preßkolben (62) auf einem Zapfen (99) schwimmend montiert ist, der mit dem Arm (101) verbunden ist, wobei ein geringes axiales Spiel zwischen dem oberen Teil (62a) des Preßkolbens (62) und dem unteren Teil (101a) des Arms ausgebildet ist.

6. Brüheinheit nach Anspruch 5, **dadurch gekennzeichnet, daß** der Preßkolben (62) eine Innenleitung (42) für den Durchlauf des Brühgetränks aufweist, welche drei Öffnungen hat, eine erste Einlaßöffnung für das Brühgetränk (42c), die in der Unterseite (43) des Kolbens mündet, eine zweite Auslaßöffnung (42b), welche einen kleinen Brunnen (64) für den Austritt des Brühgetränks bildet, und eine dritte Öffnung (42a), die einen Lufteinlaß bildet und im oberen Teil (62a) des Kolbens ausgebildet ist, wobei der Preßkolben (62) außerdem auf dem Zapfen (99) axial beweglich montiert ist und die dritte Öffnung (42a) eine Dichtung (13) aufweist, welche diese Öffnung verschließen kann, wenn der Kolben in Kontakt mit dem unteren Teil (101a) des Arms (101) kommt.

7. Brüheinheit nach einem der Ansprüche 1 bis 6, **dadurch gekennzeichnet, daß** der Auswurfmechanismus (16) einerseits eine mit der Filterplatte (36) fest verbundene Stange (20) aufweist, die im Körper (10) gemäß der vertikalen Achse (V) verschiebbar montiert ist und an ihrem äußeren Ende eine kleine Platte (22) aufweist, wobei die Filterplatte (36) durch eine zwischen dem Körper (10) und der kleinen Platte (22) angeordnete Feder (21) elastisch in Richtung auf den Boden (11) der Brühkammer (31) beaufschlagt ist, und andererseits einen Arm (67) aufweist, der quer mit der unteren Stange (38) des Arbeitszylinders (61) verbunden und an der Stange drehbar gehalten ist und von dem ein Ende (70) mit einer Strecke (69a) einer Nocke (69) in Eingriff kommt, die von einem Flügel (72) getragen ist, der sich in einer vertikalen Ebene unter dem Arbeitszylinder (61) erstreckt, während das andere Ende (73) entweder mit dem der kleinen Platte (22) in Eingriff kommen kann, wenn der Kolbenkopf (35) aus seiner unteren in seine obere Stellung gelangt, oder von dieser Platte freikommt, wenn der Kopf (35) aus seiner oberen in seine untere Stellung gelangt.

8. Brüheinheit nach einem der Ansprüche 1 bis 7, **dadurch gekennzeichnet, daß** sie eine Austragvorrichtung für den Brühfilterkuchen aufweist, die eine nach oben vorspringende Führungskonsole (24) aufweist, die mit dem Arbeitszylinder (61) fest verbunden ist und einen Hebel (25) trägt, der um eine zur vertikalen Achse (V) quer verlaufende Achse schwenkbar ist und an seinem freien Ende (103) einen Schieber (23) trägt, der mittels eines mit dem Arm (101) fest verbundenen Fingers (40) im Bereich der Mündung (15) mit einer quer verlaufenden Pendel-Querbewegung bewegt werden kann, wobei der Finger in Eingriff mit einer Kerbe (41) gelangt, die vom Hebel (25) auf der Höhe der Achse (102) getragen ist, wenn der Kolbenkopf (35) seine Ruhestellung einnimmt.
